# NOUVEAU FASCICULE DE BREVET EUROPEEN

(11) **EP 2 303 631 B2**
(45) Date de publication et mention de la décision concernant l'opposition: **30.08.2017**
(45) Mention de la délivrance du brevet: 10.10.2012
(21) Numéro de dépôt: 09772653.3
(22) Date de dépôt: 10.06.2009
(51) Int. Cl.: B60N 2/42, B60N 2/36, B60N 2/24, F41H 7/04

(54) **SIEGE POUR VEHICULE BLINDE**
SITZ FÜR EIN GEPANZERTES FAHRZEUG
SEAT FOR AN ARMOURED VEHICLE

(30) Priorité: 13.06.2008 FR 0803310
(43) Date de publication de la demande: 06.04.2011
(73) Titulaire: NEXTER Systems, 42328 Roanne (FR)
(72) Inventeur: POIRMEUR Xavier, 78280 Guyancourt (FR); GODARD Michel, 42720 Vougy (FR); BETTENCOURT Benoît, 92370 Chaville (FR); SAGORY Bernard, 78280 Guyancourt (FR)
(74) Mandataire: Célanie, Christian
(86) Numéro de dépôt international: PCT/FR2009/000683
(87) Numéro de publication internationale: WO 2010/000970

(56) Documents cités:
- EP-B1- 2 224 833
- WO-A-98/00309
- WO-A-03/004958
- CA-A1- 2 504 928
- DE-A1- 1 762 376
- DE-A1- 1 966 727
- DE-A1- 4 324 882
- DE-A1- 4 331 206
- DE-A1- 10 130 631
- DE-A1- 19 927 503
- DE-A1-102004 048 177
- DE-B3- 10 317 314
- DE-C1- 19 702 398
- DE-U1- 20 107 181
- DE-U1- 20 108 213
- DE-U1- 20 210 749
- DE-U1- 20 217 072
- US-A- 3 093 414
- US-A- 5 125 598
- US-A- 5 273 240
- US-B2- 6 585 190

## Description

Le domaine technique de l'invention est celui des sièges pour véhicules et notamment des sièges pour véhicules blindés (cf. par exemple DE-10317314B3).

Les véhicules blindés sont amenés sur les terrains d'opérations à être confrontés à des mines et des IED (selon l'acronyme anglo saxon "Improvised Explosive Devices") ou bien en français EEI (Engins Explosifs Improvisés). Ces IED sont des moyens explosifs improvisés mais qui peuvent mettre en oeuvre des masses d'explosif ou d'autres matériaux énergétiques (essence, gaz) importantes.

Les chocs reçus alors par la structure et en particulier le plancher des véhicules sont considérables et on cherche généralement lorsque l'on conçoit les sièges du véhicule à les isoler du plancher du véhicule.

Le brevet WO98/00309A propose ainsi de prévoir une structure déformable entre le plancher et le siège, structure qui absorbe une partie du choc communiqué par le plancher.

Le brevet WO03/004958A propose d'assurer la rupture de la liaison entre le plancher et le sol.

Une solution plus intéressante qui est mise en oeuvre aujourd'hui consiste à suspendre le siège au plafond ou à une paroi latérale. On découple ainsi le siège du plancher.

Cependant les chocs reçus par la cabine du véhicule communiquent au siège une accélération dont le niveau excessif peut provoquer de graves blessures.

L'invention a pour but de proposer un siège de véhicule blindé de structure simple et assurant cependant un excellent niveau de protection vis à vis des chocs reçus par le véhicule lors de l'explosion d'une mine ou d'un IED.

Ainsi l'invention a pour objet un siège pour véhicule blindé, destiné à assurer une protection d'une personne occupant le siège vis à vis des chocs reçus par le véhicule lors de l'explosion d'une mine ou d'un engin explosif improvisé comportant un dossier solidaire d'une paroi ou du plafond du véhicule et une assise montée pivotante par rapport au dossier entre une position repliée ou elle est sensiblement parallèle au dossier et une position dépliée ou elle est en butée et se trouve sensiblement perpendiculaire au dossier, siège caractérisé en ce que l'assise est reliée au dossier par un moyen de liaison assurant en cas d'effort d'un niveau prédéterminé la libération de la butée de l'assise et le pivotement de cette dernière au-delà de la position dépliée, la personne occupant le siège ne se trouvant ainsi pas soumise à un choc de niveau supérieur à celui libérant ladite butée de l'assise.

Selon une caractéristique de l'invention, l'assise est montée pivotante entre deux supports verticaux, le moyen de liaison comportant au moins un organe formant butée et coopérant avec une surface d'arrêt solidaire d'un des supports, le profil de l'organe, de la surface d'arrêt et la forme des supports étant choisis de façon à ce que l'organe provoque une déformation du support pour un niveau d'effort prédéterminé exercé sur l'assise.

Selon une autre caractéristique de l'invention, les supports sont formés de plaques métalliques, la surface d'arrêt étant formée par un rebord fixé sur une face de la plaque qui est en regard de l'assise (3) pivotante.

Selon encore une autre caractéristique de l'invention, la plaque comporte un profil tel qu'un effort d'un certain niveau exercé sur l'assise provoque une déformation de la plaque écartant le rebord de la butée.

Selon encore une autre caractéristique de l'invention, le siège comprend deux organes coopérant chacun avec une surface d'arrêt d'un support vertical.

L'invention sera mieux comprise à la lecture de la description qui va suivre d'un mode particulier de réalisation, description faite en référence aux dessins annexés et dans lesquels:
- la figure 1 montre en vue latérale un siège selon un mode de réalisation de l'invention, la vue est réalisée en coupe suivant le plan dont la trace AA est repérée à la figure 2, la partie droite de la figure montrant le siège en position dépliée et la partie gauche le même siège en position repliée,
- la figure 2 est une vue frontale de ce même siège dans sa position dépliée,
- la figure 3 montre le comportement du siège en cas de choc,
- la figure 4 est une vue de détail agrandie montrant la coopération d'une butée avec la face arrière d'un support
- la figure 5 montre de façon partielle un autre mode de réalisation d'un support d'assise,
- la figure 6 est une vue en coupe partielle de la précédente, coupe réalisée suivant le plan dont la trace BB est repérée à la figure 5.

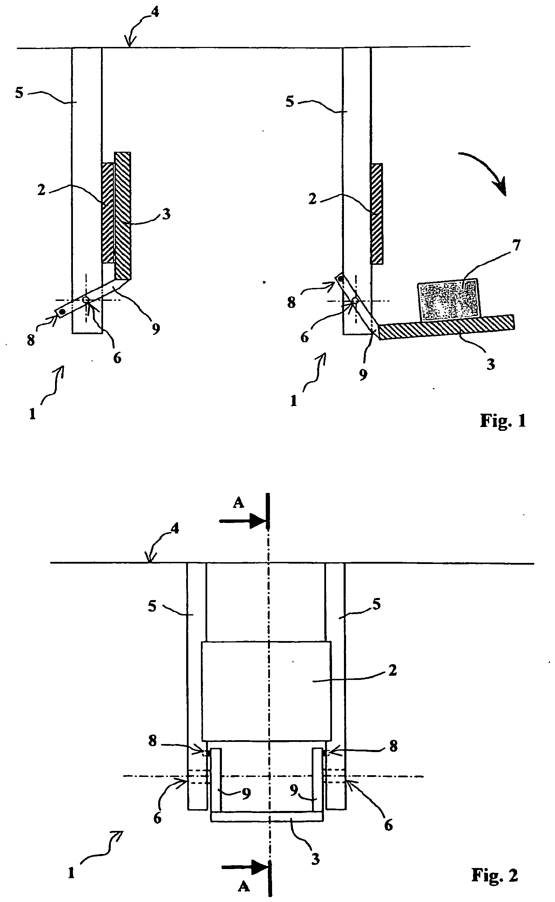

En se reportant à la figure 1, un siège 1 pour véhicule blindé, comporte un dossier 2 et une assise 3. Le dossier 2 est rendu solidaire du plafond 4 de la cabine d'un véhicule par l'intermédiaire de deux supports verticaux 5 parallèles entre eux. Le dossier 2 pourrait tout aussi bien être rendu solidaire d'une paroi latérale de cette cabine avec une structure de supports appropriée.

L'assise 3 est montée pivotante par rapport aux supports 5 (donc aussi par rapport au dossier 3 qui est fixé aux supports) à l'aide de pivots 6.

L'assise 3 peut ainsi passer d'une position repliée (partie gauche de la figure 1) dans laquelle elle est sensiblement parallèle au dossier 2 à une position dépliée (partie droite de la figure 1) dans laquelle elle se trouve sensiblement perpendiculaire au dossier. Un moyen ressort (non représenté) pourra éventuellement être prévu pour ramener, en l'absence de charge 7, l'assise à sa position repliée.

Le pivotement de l'assise 3 est arrêté par deux butées 8 qui sont solidaires de bras 9 fixés à l'assise et qui portent aussi les pivots 6.

Suivant ce premier mode de réalisation, les butées 8 viennent en contact avec une face arrière des supports 5. Ces butées pourront être constituées par des tiges cylindriques en acier qui présenteront une extrémité sphérique. Le profil de la tige sera choisi de façon à pouvoir déformer le support 5 pour un niveau d'effort prédéterminé par calcul lors de la conception du siège.

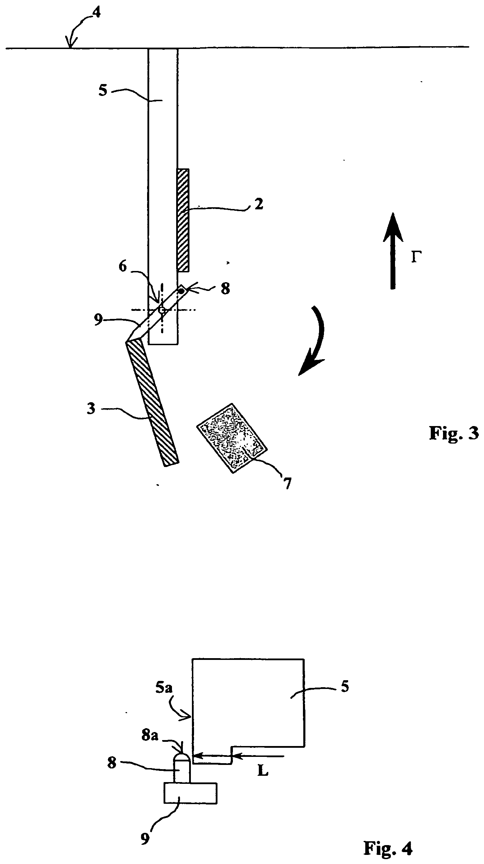

La figure 3 montre le siège selon l'invention lorsqu'une accélération Γ de niveau important est communiquée à la cabine du véhicule par l'explosion d'une mine ou d'un IED.

La personne occupant le siège se trouve alors soumise à un effort opposé à Γ d'un niveau très important. Cet effort est communiqué par l'assise 3 aux butées 8. La longueur de ces dernières et leur profil éventuellement arrondi leur permet de déformer les supports 5 et autorise donc le passage des butées 8 et le pivotement de l'assise 3 au-delà de sa position dépliée. La personne occupant le siège ne se trouve donc pas soumise à un choc de niveau supérieur à celui libérant les butées 8 de l'assise. La personne tombe sur le plancher de la cabine mais après l'instant critique où les efforts sont maximaux.

La figure 4 est une vue de détails qui montre l'extrémité arrondie 8a d'une butée 8 et sa coopération avec la face arrière 5a d'un support 5. On voit aussi sur cette figure qu'il est possible de réduire la largeur L du support 5 au niveau de la butée 8. Ainsi cette dernière échappera au support 5 pour un angle de pivotement de l'assise inférieur. Il en résultera une libération plus rapide de l'occupant de l'assise.

Il sera possible à l'aide d'un outillage approprié de repositionner l'assise à sa position repliée. L'outillage sera conçu pour assurer une déformation élastique des supports 5 pour autoriser un retour en arrière de la butée 8.

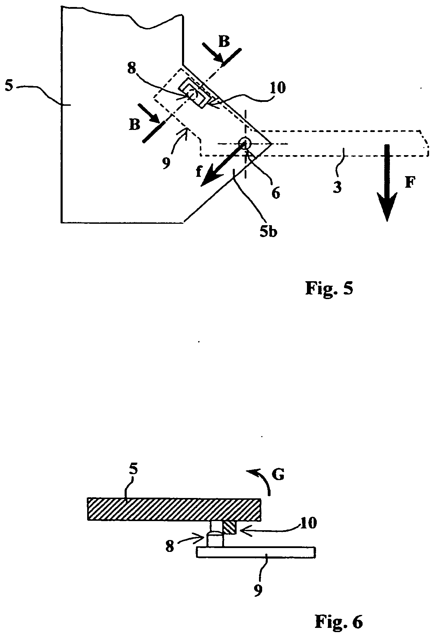

Les figures 5 et 6 montrent un autre mode de réalisation de l'invention.

On voit sur la figure 5 que chaque support 5 est réalisé sous la forme d'une plaque métallique.

On a représenté sur cette figure 5 par des traits pointillés l'assise 3 et un bras 9 solidaire de l'assise.

On remarque que le support 5 comporte un prolongement 5b sensiblement triangulaire au niveau duquel est fixé le pivot 6 de l'assise. La surface d'arrêt est ici constituée par un rebord 10 en forme de U qui est fixé (par exemple par soudure) sur la face de la plaque 5 qui est en regard de l'assise pivotante 3 ainsi que de ses bras 9.

La figure 6 montre en coupe partielle la forme de la surface d'arrêt 10 contre laquelle vient en appui la butée 8.

Lorsqu'un effort d'un certain niveau F est exercé sur l'assise 3, cet effort se décompose au niveau de chaque plaque 5 en des efforts f exercés au niveau des pivots 6. Ces efforts f vont (au dessus d'un certain niveau) provoquer le flambage des plaques 5, ce qui va provoquer une déformation transversale des prolongements 5b des supports 5 (flèche G). Ces déformations G, combinées à l'effort qui est exercé par chaque butée 8 sur son rebord 10, vont conduire à permettre le passage des butées 8, ce qui libère l'assise 3.

Un seul support 5 est représenté ici. Il y a bien entendu un deuxième support 5 identique parallèle à celui ci et portant lui aussi un rebord 10 coopérant avec une autre butée.

## Revendications

1. Siège (1) pour véhicule blindé, destiné à assurer une protection d'une personne occupant le siège vis à vis des chocs reçus par le véhicule lors de l'explosion d'une mine ou d'un engin explosif improvisé comportant un dossier (2) solidaire d'une paroi ou du plafond (4) du véhicule et une assise (3) montée pivotante par rapport au dossier (2) entre une position repliée ou elle est sensiblement parallèle au dossier (2) et une position dépliée ou elle est en butée et se trouve sensiblement perpendiculaire au dossier (2), siège ***caractérisé en ce que*** l'assise (3) est reliée au dossier (2) par un moyen de liaison (6, 8) assurant en cas d'effort d'un niveau prédéterminé la libération de la butée (8) de l'assise (3) et le pivotement de cette dernière au-delà de la position dépliée, la personne occupant le siège ne se trouvant ainsi pas soumise à un choc de niveau supérieur à celui libérant ladite butée de l'assise.

2. Siège selon la revendication 1, **caractérisé en ce que** l'assise (3) est montée pivotante entre deux supports verticaux (5), le moyen de liaison comportant au moins un organe (8) formant butée et coopérant avec une surface d'arrêt (5a, 10) solidaire d'un des supports (5), le profil de l'organe (8), de la surface d'arrêt (5a, 10) et la forme des supports (5) étant choisis de façon à ce que l'organe (8) provoque une déformation du support (5) pour un niveau d'effort prédéterminé exercé sur l'assise (3).

3. Siège selon la revendication 2, **caractérisé en ce que** les supports (5) sont formés de plaques métalliques, la surface d'arrêt étant formée par un rebord (10) fixé sur une face de la plaque (5) qui est en regard de l'assise (3) pivotante.

4. Siège selon la revendication 3, **caractérisé en ce que** la plaque (5) comporte un profil (5a) tel qu'un effort d'un certain niveau exercé sur l'assise (3) provoque une déformation de la plaque (5) écartant le rebord (10) de la butée (8).

5. Siège selon une des revendications 2 à 4, **caractérisé en ce qu'**il comprend deux organes (8) coopérant chacun avec une surface d'arrêt d'un support vertical (5).

## Patentansprüche

1. Sitz (1) für gepanzertes Fahrzeug, welcher dafür vorgesehen ist, einen Schutz einer den Sitz belegenden Person gegenüber von dem Fahrzeug aufgenommenen Stößen bei der Explosion einer Mine oder eines selbst gebastelten Sprengkörpers zu gewährleisten, umfassend eine Rückenlehne (2), die fest mit einer Wand oder der Decke (4) des Fahrzeuges verbunden ist, und eine Sitzfläche (3), welche in Bezug auf die Rückenlehne (2) zwischen einer eingeklappten Position, in welcher sie im. Wesentlichen parallel zur Rückenlehne (2) ist, und einer aufgeklappten Position drehbar ist, in welcher sie anliegt und sich im Wesentlichen senkrecht zur Rückenlehne (2) befindet, wobei der Sitz ***dadurch gekenntzeichnet ist, dass*** die Sitzfläche (3) durch ein Verbindungsmittel (6, 8) mit der Rückenlehne (2) verbunden ist, welches im Falle einer Beanspruchung von einer vorgegebenen Stärke die Freigabe wenigstens eines Anschlags (8) der Sitzfläche (3) und das Drehen dieser Letzteren darüber hinaus aus der aufgeklappten Position gewährleistet, wobei die den Sitz belegende Person somit keinem Stoß ausgesetzt ist, dessen Niveau größer ist als jenes, welches den sogenannten Anschlag der Sitzfläche freigibt.

2. Sitz nach Anspruch 1, **dadurch gekennzeichnet, dass** die Sitzfläche (3) drehbar zwischen zwei senkrechten Trägern (5) montiert ist, wobei das Verbindungsmittel wenigstens ein Anschlag bildendes Organ (8) umfasst und mit einer Arretierfläche (5a, 10) zusammenwirkt, welche fest mit einem der Träger (5) verbunden ist, wobei das Profil des Organs (5), der Arretierfläche (5a, 10) und die Form der Träger (5) derartig gewählt sind, dass das Organ (8) bei einer Beanspruchung von vorgegebener Stärke, die auf die Sitzfläche (3) ausgeübt wird, eine Verformung des Trägers (5) hervorruft.

3. Sitz nach Anspruch 2, **dadurch gekennzeichnet, dass** die Träger (5) aus Metallplatten gebildet werden, wobei die Arretierfläche von einer Kante (10) gebildet wird, die auf einer Fläche der Platte (5) befestigt ist, welche der drehbaren Sitzfläche (3) gegenüber liegt.

4. Sitz nach Anspruch 3, **dadurch gekennzeichnet, dass** die Platte (5) ein Profil (5a) derartig umfasst, dass eine Beanspruchung von einer bestimmten Stärke, die auf die Sitzfläche (3) ausgeübt wird, eine Verformung der Platte (5) hervorruft, welche die Kante (10) vom Anschlag (8) entfernt.

5. Sitz nach einem der Ansprüche 2 bis 4, **dadurch gekennzeichnet, dass** er zwei Organe (8) umfasst, die jeweils mit einer Arretierfläche eines senkrechten Trägers (5) zusammenwirken.

## Claims

1. A seat (1) for an armoured vehicle, intended to insure a protection for a person occupying the seat with respect to the shocks received by the vehicle during the explosion of a mine or IED, incorporating a back rest (2) integral with a wall or the roof (4) of the vehicle and a sitting part (3) mounted able to pivot with respect to the back rest (2) between a folded position in which it is substantially parallel to the back rest (2) and an unfolded position where it is held by a limit stop and is substantially perpendicular to the back rest (2), such seat ***wherein*** the sitting part (3) is connected to the back rest (2) by linking means (6, 8) ensuring, in the event of a predetermined load, the release of the limit stop (8) of the sitting part (3) and its pivoting beyond the unfolded position, the person occupying the seat being thus no longer subjected to a shock of a higher level than that needed to release said limit stops of the sitting part.

2. A seat according to Claim 1, wherein the sitting part (3) is mounted able to pivot between two vertical supports (5), the linking means incorporating at least one organ (8) forming a limit stop and cooperating with a stop surface (5a, 10) integral with one of the supports (5), the profile of the organ (8), the stop surface (5a, 10) and the shape of the supports (5) being selected so that the organ (8) causes a deformation of the support (5) when a predetermined load is exerted on the sitting part (3).

3. A seat according to Claim 2, wherein the supports (5) are formed of metallic plates, the stop surface being formed by a rim (10) fitted to a face of the plate (5) that is facing the pivoting sitting part (3).

4. A seat according to Claim 3, wherein the plate (5) incorporates a profile (5a) such that a load of a certain level exerted on the sitting part (3) causes the plate (5) to deform distancing the rim (10) from the limit stop (8).

5. A seat according to one of Claims 2 to 4, wherein it comprises two organs (8) each cooperating with a stop surface of a vertical support (5).
